Europäisches Patentamt

European Patent Office

Office européen des brevets

(19)

(11) Veröffentlichungsnummer: **0 068 238**
**B1**

(12) **EUROPÄISCHE PATENTSCHRIFT**

(45) Veröffentlichungstag der Patentschrift:
24.09.86

(21) Anmeldenummer: 82105134.9

(22) Anmeldetag: 11.06.82

(51) Int. Cl.⁴: **H 02 G 1/12**

(54) **Handgerät zum staubfreien Abisolieren der Enden von Wicklungen in elektrischen Maschinen.**

(30) Priorität: 22.06.81 DE 3124397

(43) Veröffentlichungstag der Anmeldung:
05.01.83 Patentblatt 83/1

(45) Bekanntmachung des Hinweises auf die Patenterteilung:
24.09.86 Patentblatt 86/39

(84) Benannte Vertragsstaaten:
AT BE CH FR GB IT LI NL SE

(56) Entgegenhaltungen:
DE-A-1 918 467
FR-A-1 084 120
US-A-2 526 769
US-A-2 704 856
US-A-3 719 007
US-A-3 739 415

(73) Patentinhaber: **Siemens Aktiengesellschaft Berlin und München, Wittelsbacherplatz 2, D-8000 München 2 (DE)**

(72) Erfinder: **Putz, Wilhelm, Nordring 31, D-8550 Kersbach (DE)**

LIBER, STOCKHOLM 1986

EP 0 068 238 B1

## Beschreibung

Die Erfindung bezieht sich auf ein Handgrät zum staubfreien Abisolieren der Enden von Wicklungen in elektrischen Maschinen, bestehend aus einem Handgriff mit Antriebsmitteln und damit über Getriebe aus rechtwinkelig und symmetrisch zum Handgriff angeordneten Wellen verbundenen walzenfdrmigen Werkzeugen.

Die sich durch Querschnitt und Isoliersystem unterscheidenden elektrischen Leiter werden vielfach noch mit einfachen Handwerkzeugen, wie z.B. Kratzern, Ziehschabern und Schleifpapier, abisoliert. Es sind eine Reihe unterschiedlichst aufgebauter mechanisch arbeitender Abisoliergeräte vorgeschlagen worden, die sich aber in der Praxis nicht durchsetzen konnten.

Bei allen bisher bekannten Handabisoliergeräten erfolgt eine Belästigung des Bedienpersonals durch abgetragenes Isoliermaterial, z.B. Glasseide. Es ist z.B. aus der FR-A-10 84 120 ein Gerät bekannt, bei dem über einen externen Antrieb mit Drehwelle od.dgl. zwei Wellen in einem Handgriff mit frontseitigen walzenförmigen Werkzeugen aktiviert werden können. Die Wellen stehen über ein Zahnradgetriebe in Wirkverbindung, so daß sich eine gegenläufige Rotation der beiden Werkzeuge und an der Bearbeitungsstelle eine gleichläufige Wirkung ergibt.

Weitere Geräte zum Abisolieren sind aus der DE-A-19 18 467 und der US-A-25 26 769 bekannt. Diese Geräte sind relativ großvolumig und nicht als Handgeräte geeignet. Durch die Konstruktion bedingt ist dabei die Wirkung an der Bearbeitungsstelle wiederum gleichläufig.

Bei obigen Geräten können die Bearbeitungswerkzeuge einseitig abgedeckt sein. Eine Staubabkapselung und eine Staubabsaugung kann jedoch nicht erfolgen. Es ist zwar aus der US-A-27 04 856 eine Abisoliermaschine bekannt, bei der walzenförmige Werkzeuge innerhalb eines Staubabsauggehäuses angeordnet sind. Das Staubabsauggehäuse weist zwei gegenüberliegende, mittig zu den Werkzeugen und den Werkzeugachsen verlaufende Durchtrittsöffnungen auf, von denen eine Öffnung zum Anschluß einer Rohrleitung zu einem Staubabscheider vorgesehen ist. Der Antrieb ist wiederum außerhalb des eigentlichen Gerätes; angebracht, wobei die Antriebsbewegung über Riemen und Wellengetriebe auf die Werkzeuge übertragen wird.

Schließlich ist aus der US-A-37 39 415 ein Handgerät zum Reinigen von elektrischen Leitern mit einem Klemmhandgriff aus zwei Armen bekannt, die je einen Druckluftmotor tragen. An jedem Arm ist über ein Getriebe mit senkrecht und symmetrisch orientierten Zahnwellen ein walzenförmiges Werkzeug angebracht, zwischen denen Rund- oder Flachleiter unterschiedlichster Querschnitte eingebracht werden können.

Insgesamt werden beim Stand der Technik jeweils nur Teilprobleme gelöst. Es sind bisher keine leicht handhabbaren Geräte bekannt, bei denen gleichermaßen eine Staubabsaugung erfolgt.

Der Erfindung liegt daher die Aufgabe zugrunde, ein kleines flexibel handhabbares Gerät zu entwickeln, mit dem es möglich ist, die Enden elektrischer Wicklungen ohne großen Kraftaufwand und auch unter erschwerten Bedingungen der Zugänglichkeit jedoch auch mit gleichbleibender hoher Qualität abisolieren zu können. Weiterhin soll beim Abisolieren gleichzeitig eine Verschmutzung der Wicklung mit Metallabriebstaub und eine Gesundheitsgefährdung der Bedienperson durch Lack- und Glasseidenstaub vermieden werden.

Gemäß der Erfindung ist die Aufgabe dadurch gelöst, daß die walzenförmigen Werkzeuge seitlich neben einem einzigen als Handgriff ausgebildeten Antrieb liegen, wozu zwischen dem einzigen Antrieb und den Werkzeugen ein kombiniertes Winkel- und Stirnradgetriebe, das eine gleichlaufende Rotation der Werkzeuge und damit deren gegenläufige Wirkung an der Bearbeitungsstelle ermöglicht, angeordnet ist, und daß die walzenförmigen Werkzeuge, die entsprechend der Leiterdicke von außen symmetrisch einstellbar sind, innerhalb eines am Gehäuse des Winkel- und Stirnradgetriebes befestigten Staubabsauggehäuses mit zwei gegenüberliegenden, parallel zur Achse des einzigen Antriebes und mittig zu den Werkzeugen liegenden Durchtrittsöffnungen angeordnet sind, von denen die eine Öffnung einen Anschluß eines flexiblen Absaugschlauches an einen Staubabscheider bildet.

Im Gegensatz zum Stand der Technik werden mit der Erfindung die Forderungen der Praxis weitgehend erfüllt. Es ist ein kompaktes Handgerät geschaffen, das leicht handhabbar ist, da die walzenförmigen Werkzeuge an der Bearbeitungsstelle gegenläufig wirken, so daß der Kraftaufwand für die Vor- und Zurückbewegung des Handgerätes sehr gering ist. Gleichzeitig ist durch das Absauggehäuse ein staubfreies Arbeiten gewährleistet. Es können unterschiedliche Wicklungsenden bearbeitet werden, ohne daß das Absauggehäuse demontiert werden muß.

Vorteilhafterweise ist die werkstückseitige Durchtritts-Öffnung des Staubabsauggehäuses mit elastischen Dichtungen verschlossen, die z. B. aus gegeneinander angeordneten Streifenbürsten oder Gummilippen bestehen können.

Bei einem Gerät gemäß der Erfindung erfolgt der Abtrag mittels an sich bekannter rotierender Drahtbürsten. Die Drahtbürsten können gegebenenfalls auch mit einer elastischen Kunststoffmasse ausgefüllt sein. Weiterhin haben sich als Werkzeuge walzenförmige elastische Tragkörper.it aufgesteckten Schmirgelkappen als geeignet erwiesen.

Das Gerät gemäß der Erfindung zeichnet sich insbesondere durch seinen kompakten Aufbau aus. Hierzu kann als Antrieb ein Druckluftmotor mit besonders günstigem Leistungsgewicht gewählt werden, der zylinderförmig ausgebildet ist. Der Außendurchmesser eines solchen Motors beträgt maximal 40 mm und die Gesamtlänge maximal 160 mm. Die abgegebene Leistung beträgt mindestens 0,20 kW. Prinzipiell könnte als Antrieb auch ein Hochleistungselektromotor oder ein Hydraulikmotor verwendet werden.

Aus Gründen der Sicherheit ist es vorteilhaft, daß der Antrieb der Werkzeuge mit dem Staubabscheider elektrisch verriegelt ist. Der Antrieb kann nicht eingeschaltet werden, solange die Absaugung nicht eingeschaltet ist.

Zur noch leichteren Handhabung des Gerätes gemäß der Erfindung kann die aus Antrieb, Werkzeugen, Staubabsauggehäuse und Getriebe bestehende Baueinheit an einem Federzug gewichtsentlastet aufgehängt und zusammen mit einem Staubabscheider an einem mobilen Werkzeugständer angeordnet sein. Auf diese Weise ist das Handgerät gemäß der Erfindung an jeden Arbeitsplatz leicht zu transportieren.

Insgesamt wird durch die erfindungsgemäße Anordnung, insbesondere die Lage der Werkzeugachsen quer zum Handgriff mit Antrieb, eine besonders gute ergonomische Werkzeuggestaltung erreicht.

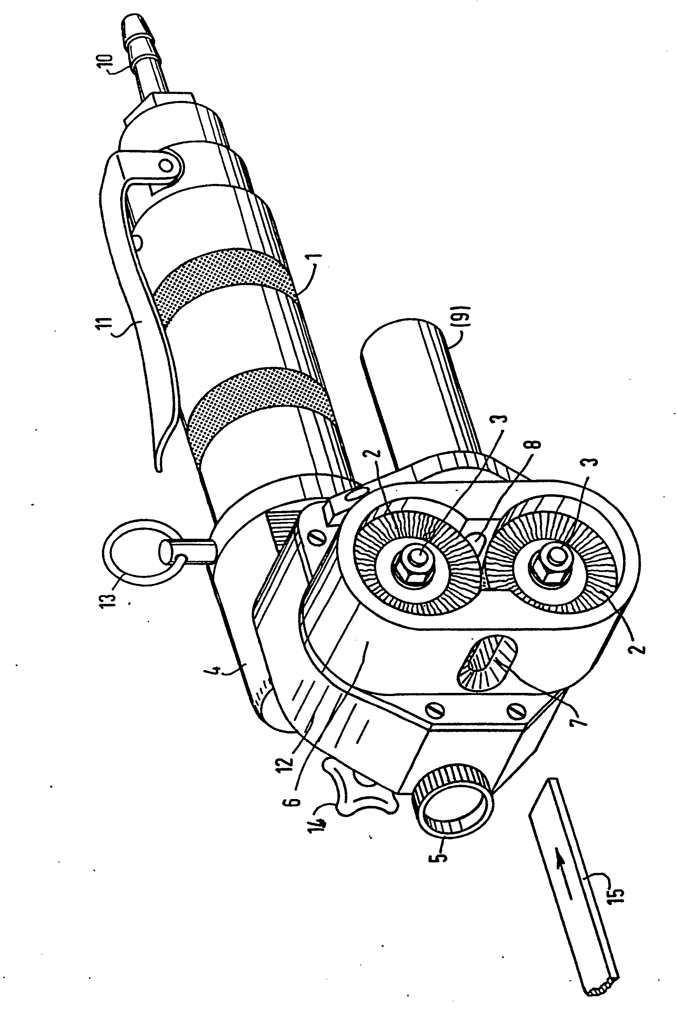

Anhand der Zeichnung und eines Ausführungsbeispiels wird die Erfindung noch näher erläutert.

Die FIG zeigt in der Perspektive das Handgerät gemäß der Erfindung. Mit 1 ist der als Handgriff ausgebildete Antrieb bezeichnet. Im Beispiel ist der Antrieb 1 ein zylinderförmiger Druckluftmotor mit einem Außendurchmesser von 38 mm, einer Gesamtlänge von 160 mm und einer abgegebenen Leistung von 0,28 kW. Der Druckluftmotor ist über den Luftanschluß 10 mit einer Druckluftquelle, die nicht dargestellt ist, verbindbar. Durch Drücken des Handhebels 11 wird ein Handhebelventil betätigt und der Druckluftmotor wird mit Preßluft versorgt und angetrieben. Der Druckluftmotor treibt über ein Winkelgetriebe 4 und ein Stirnradgetriebe 12 die Stahldrahtbürsten 2 an. Die Achsen 3 der Stahldrahtbürsten 2 sind rechtwinkelig und symmetrisch zur Achse des als Handgriff ausgebildeten Druckluftmotors angeordnet. Die Stahldrahtbürsten 2 befinden sich innerhalb eines Staubabsauggehäuses 6.

Das Staubabsauggehäuse 6 ist mit zwei gegenüberliegenden Durchtrittsöffnungen 7 und 8 für den abzuisolierenden Leiter 15 versehen. Die Durchtrittsöffnungen 7 und 8 liegen parallel zur Achse des Druckluftmotors und mittig zu den Stahldrahtbürsten 2. Mit 9 ist der Anschluß für einen flexiblen nicht dargestellten Absaugschlauch zu einem nicht dargestellten Staubabscheidter bezeichnet. Mittels der Stellschraube 5 können die Stahldrahtbürsten 2 von außen symmetrisch auf die Dicke des abzuisolierenden Leiters 15 eingestellt werden.

Die in der Zeichnung nicht dargestellten Bürstenträgergelenke werden mit der Feststellschraube 14 eingestellt. An der Aufhängeöse 13 kann das Gerät an einem nicht dargestellten Federzug gewichtsentlastet an einem nicht dargestellten mobilen Werkzeugständer aufgehängt werden.

Der Abtrag der Isolation des Leiters 15 erfolgt so, daß das Ende des Leiters 15 zwischen die beiden rotierenden Stahldrahtbürsten 2 eingeführt und im abzuisolierenden Bereich mehrmals vor- und zurückbewegt wird. Eine Belästigung des Bedienpersonals erfolgt nicht, da das abgetragene Isoliermaterial innerhalb des Staubabsauggehäuses 6 abgesaugt wird und über die Durchtrittsöffnung 8, den Anschluß 9 sowie einen nicht dargestellten flexiblen Absaugschlauch einem nicht dargestellten Staubabscheider zugeführt wird.

Das beschriebene Handgerät zeichnet sich gegenüber bekannten Geräten durch seine Kompaktheit, leichte Handhabbarkeit, Abtragswirksamkeit und Umweltfreundlichkeit aus.

**Patentansprüche**

1. Handgerät zum staubfreien Abisolieren der Enden von Wicklungen in elektrischen Maschinen, bestehend aus einem Handgriff mit Antriebsmitteln und damit über Getriebe aus rechtwinklig und symmetrisch zum Handgriff angeordneten Wellen verbundenen walzenförmigen Werkzeugen (2), dadurch gekennzeichnet, daß die walzenförmigen Werkzeuge (2) seitlich neben einem einzigen als Handgriff ausgebildeten Antrieb (1) liegen, wozu zwischen dem einzigen Antrieb (1) und den Werkzeugen (2) ein kombiniertes Winkel- und Stirnradgetriebe (4, 12), das eine gleichlaufende Rotation der Werkzeuge (2) und damit deren gegenläufige Wirkung an der Bearbeitungsstelle ermöglicht, angeordnet ist, und daß die walzenförmigen Werkzeuge (2), die entsprechend der Leiterdicke von außen (Stellschraube (5)) symmetrisch einstellbar sind, innerhalb eines am Gehäuse des Winkel- und Stirnradgetriebes (4, 12) befestigten Staubabsauggehäuses (6) mit zwei gegenüberliegenden, parallel zur Achse des einzigen Antriebes (1) und mittig zu den Werkzeugen (2) liegenden Durchtrittsöffnungen (7, 8) angeordnet sind, von denen die eine Öffnung (8) einen Anschluß (9) eines flexiblen Absaugschlauches an einen Staubabscheider bildet.

2. Handgerät nach Anspruch 1, dadurch gekennzeichnet, daß als Antrieb (1) ein Druckluftmotor vorgesehen ist.

3. Handgerät nach Anspruch 2, dadurch gekennzeichnet, daß der Druckluftmotor zylinderförmig ausgebildet ist, wobei dessen Außendurchmesser maximal 40 mm und die Gesamtlänge maximal 160 mm und dessen abgegebene Leistung mindestens 0,20 kW beträgt.

4. Handgerät nach Anspruch 1, dadurch gekennzeichnet, daß als Werkzeuge (2) Drahtbürsten vorgesehen sind.

5. Handgerät nach Anspruch 4 dadurch gekennzeichnet, daß die Drahtbürsten mit einer elastischen Kunststoffmasse ausgefüllt sind.,

6. Handgerät nach Anspruch 1, dadurch gekennzeichnet, daß als Werkzeuge (2) walzenförmige elastische Tragkörper mit aufgesteckten Schmirgelkappen vorgesehen sind.

7. Handgerät nach Anspruch 1, dadurch gekennzeichnet, daß die werkstückseitige Durchtrittsöffnung (7) des Staubabsauggehäuses (6) mit elastischen Dichtungen verschlossen ist.

8. Handgerät nach Anspruch 7, dadurch gekennzeichnet, daß als Dichtungen gegeneinander angeordnete Streifenbürsten oder Gummilappen vorgesehen sind.

9. Handgerät nach einem der vorhergehenden Ansprüche, dadurch gekennzeichnet, daß der Atrieb; (1) der Werkzeuge (2) mit dem Staubabscheider elektrisch verriegelt ist.

## Claims

1. A hand-held device for the dust-free stripping of the ends of coils in electrical machines, consisting of a handle with driving means and cylindrical tools (2) connected therewith through gearing and consisting of shafts arranged at right angles and symmetrically to the handle, characterised in that the cylindrical tools (2) are laterally positioned beside a single drive (1) which is in the form of a handle, for which purpose a combined mitre and spur wheel gear (4, 12), which permits a synchronous rotation of the tools (2) and thus their oppositely directed effect at the processing point, is arranged between the single drive (1) and the tools (2); and that the cylindrical tools (2), which can be symmetrically adjusted from the outside in accordance with the conductor thickness, are arranged within a dust-collecting housing (6) which is secured to the housing of the mitre and spur wheel gear (4, 12) and which has two oppositely arranged openings (7, 8) which are positioned parallel to the axis of the single drive (1) and centrally to the tools (2), and one of which openings (8) forms a connection (9) for a flexible suction hose of a dust separator.

2. A hand-held device as claimed in Claim 1, characterised in that a compressed air motor is provided as the drive (1).

3. A hand-held device as claimed in Claim 2, characterised in that the compressed air motor is cylindrical, and its outer diameter is at most 40 mm, its overall length at most 160 mm and its delivered power at least 0.20 kW.

4. A hand-held device as claimed in Claim 1, characterised in that wire brushes are provided as tools (2).

5. A hand-held device as claimed in Claim 4, characterised in that the wire brushes are filled with an elastic synthetic resin material.

6. A hand-held device as claimed in Claim 1, characterised in that cylindrical elastic support bodies with attached emery caps are provided-as tools (2).

7. A hand-held device as claimed in Claim 1, characterised in that the opening (7) of the dustcollecting housing (6) at the tool end, is sealed with elastic seals.

8. A hand-held device as claimed in Claim 7, characterised in that strip brushes or rubber flaps, arranged against one another, are provided as seals.

9. A hand-held device as claimed in one of the preceding Claims, characterised in that the drive (1) for the tools (2) is electrically-interlocked with the dust-separator.

## Revendications

1. Appareil à main pour dénuder sans dégagement de poussière les extrémités de bobinages dans les machines électriques, constitué d'une poignée avec des moyens d'entraînement et d'outils cylindriques (2) qui y sont reliés par des transmissions comprenant des arbres disposés à angle droit et symétriquement par rapport à la poignée, caractérisé en ce que les outils cylindriques (2) sont situés latéralement à côté d'une commande (1) unique réalisée en forme de poignée, avec disposition, à cet effet, entre la commande (1) unique et les outils (2), d'un engrenage combiné à roues coniques et à roues droites (4, 12), qui permet de faire tourner les outils (2) dans le même sens, donc de les faire agir en opposition au point de travail, et que les outils cylindriques (2), réglables symétriquement de l'extérieur en fonction de l'épaisseur du conducteur à dénuder, sont logés dans un capot (6) d'aspiration de poussière fixé au carter de l'engrenage à roues coniques et à roues droites (4, 12) et pourvu de deux ouvertures de passage (7, 8) disposées l'une en face de l'autre parallèlement à l'axe de la commande (1) unique et centrées par rapport aux outils (2), l'une (8) de ces ouvertures formant un raccordement (9) pour un tuyau flexible d'aspiration menant à un séparateur de poussière.

2. Appareil selon la revendication 1, caractérisé en ce que la commande (1) est un moteur à air comprime.

3. Appareil selon la revendication 2, caractérisé en ce que le moteur à air comprimé est cylindrique, possède un diamètre extérieur maximal de 40 mm et une longueur totale maximale de 160 mm et délivre une puissance d'au moins 0,20 kW.

4. Appareil selon la revendication 1, caractérisé en ce que les outils (2) sont des brosses métalliques.

5. Appareil selon la revendication 4, caractérisé en ce que les brosses métalliques sont remplies d'une masse de matière plastique élastique.

6. Appareil selon la revendication 1, caractérisé en ce que les outils (2) sont constitués de supports cylindriques élastiques sur lesquels sont enfilées des garnitures à l' émeri en forme de coupelles.

7. Appareil selon la revendication 1, caractérisé en ce que l'ouverture de passage (7) prévue sur le capot d'aspiration de poussière (6) du côté du conducteur à dénuder est fermée par des joints élastiques.

8. Appareil selon la revendication 7, caracterisé en ce que les joints sont constitués par des brosses en formes de bandes ou par des lèvres en caoutchouc disposées l'une en face de l'autre.

9. Appareil selon une des revendications précédentes, caractérisé en ce que la commande (1) des outils (2) est verrouillée électriquement avec le séparateur de poussière.